# EUROPEAN PATENT SPECIFICATION

(11) **EP 1 792 883 B1**
(45) Date of publication and mention of the grant of the patent: **16.04.2014**
(21) Application number: 05425859.5
(22) Date of filing: 01.12.2005
(51) Int. Cl.: C04B 40/02

(54) **Process for manufacturing a facing panel and panel manufactured thereby**
Verkleidungspaneel und sein Herstellungsverfahren
Panneau de parement et methode de production

(43) Date of publication of application: 06.06.2007
(73) Proprietor: Newstone s.r.l., 38059 Villa Agnedo TN (IT)
(72) Inventor: Ferronato, Stefano, 31030 Borso del Grappa (TV) (IT); Ferronato, Mirko, 31030 Borso del Grappa (TV) (IT)
(74) Representative: Concone, Emanuele

(56) References cited:
- EP-A- 0 989 104
- EP-A- 1 106 587
- FR-A- 2 593 169
- GB-A- 1 200 721
- GB-A- 2 375 120
- GB-A- 2 412 125
- US-A- 5 244 941
- US-A1- 2003 059 558
- CHEMICAL ABSTRACTS + INDEXES, AMERICAN CHEMICAL SOCIETY. COLUMBUS, US, 15 May 1978 (1978-05-15), XP000402491 ISSN: 0009-2258

## Description

The present invention concerns a process for manufacturing facing panels to be applied to ceilings and walls, both inner and external of buildings, to pillars, enclosures or other structures used in housebuilding, as well as to ceiling members such as roofs, etc..

The invention further concerns a facing panel built through such process.

The use of articles reproducing the outer surface of building structures made of stone, stone, masonry or wood, for covering bearing structures of buildings or parts thereof, both as a protection and a decoration, is well known. Traditionally these panels, also referred to as made of "reconstructed" or "reconstituted" stone have been made by using mixes prising cement and inert materials.

More recently facing panels have been proposed that are manufactured using granules of mineral substances and a resin. A process of the kind is known for instance from DE3127936 and provides for pouring into a mould a mixture comprising an epoxy resin, a curing agent, mineral granules and other additives.

It is further known a process for manufacturing a facing panel resembling or looking like the surface of articles made of stone, bricks, etc. by pouring into a suitable mould a mixture comprising at least a resin and mineral granules such as of stone, marble, cement, metal, quartz, etc.

GB-A-1 200 721 discloses a method of producing chemically resistant wall panels, shaped bricks or tiles comprises mixing quartz sand with furfuryl alcohol and epoxy resin and a catalyst, thoroughly mixing the mixture and pouring it into a mould and compacting it, and hardening the compacted mixture at 20 to 80° C.

Chemical Abstracts + Indexes, Am. Chem. Soc. Columbus, US, 15 May 1978 - XP000402491 ISSN: 0009-2258 discloses an artificial stone article with the appearance of natural granite obtained by moulding two pasty masses layered one over the other, the first comprising polyester resin with powered granite, coloring material and an accelerator, whereas the second mass comprises polyester resin, an accelerator, a coloring matter and a thickener.

EP-A-0 989 104 discloses an agglomerated material, advantageously suitable for the production of slabs or tiles or blocks for floors and/or coverings, consisting of a mixture comprising a baked clay raw material, a binder, and an inert filler. GB 2 412 125 A and GB 237 5 120 also disclose panels simulating brick work.

Although a panel obtained in accordance with the prior art has a reduced thickness and a good mechanical stiffness as well as a good moisture resistance, nevertheless it brings about some drawbacks, particularly in respect of its external appearance and of the time requested for its manufacturing.

Moreover, the use of such facing panels is now spreading between hobbysts, i.e. between users provided with more limited resources and tools in comparison to those available in building yards, and having relatively modest demands in respect of the quantity, but greater needs in respect of the variety. For this currently expanding applications the known panels are still too much bulky and heavy, sometimes also with an excessive thickness that calls for strong fixing means and a difficult fixing in place. As for what concerns the size, the known panels are often too large and cannot be easily combined to achieve an overall facing that has a "natural" appearance.

A smaller thickness of the panels would make easier their cutting by the final user, reducing waste of material and allowing for making panels of different shapes, by means of border connections, etc. starting from a single basic panel.

An additional consequence of the spreading of such panels among do-it-yourself users has pointed out some limits of the known processes particularly with regard to the manufacturing speed. As a matter of fact the diffusion of the article among private users leads to a demand for several types and varieties of the panels, generally in small amounts so that the manufacturing time negatively effects the final cost of the panel or even the economical feasibility of small series of panels.

A further limitation of the known panels comes from their regular shape, square or rectangular, which on one hand makes easy their assembling, but on the other hand generates a poorly realistic visual effect, since it introduces a repetitiveness of the elements that emphasizes their artificiality. This is quite prejudicial to the use of the panels since it betrays the artificiality of the covering even when using panels that reproduce the natural elements in a very realistic way.

It is an object of the present invention to improve the process for manufacturing facing panels of the above discussed type, particularly in respect of the process time, their external aspect and their capability to be combined together.

It is another object of the invention to provide a facing panel the surface of which resembles the surface of articles made of "natural" materials such as stone, bricks, wood, etc., that is lightweight, resistant and of low cost.

The above and additional objects are achieved through the invention as claimed in the independent claims.

Additional characteristics are recited in the dependent claims.

The facing panels according to the invention are used for covering or lining the inner or outer structures of buildings, such as walls, ceilings, enclosures, columns, metal frameworks, wells, etc.

The invention will now be disclosed with reference to the attached drawings that show preferred but not limiting embodiments of the invention, in which:
Figgs. 1 and 2 show the external appearance of panels according to the invention;
Fig. 3 is a cross section view of a portion of a mould for manufacturing a panel according to the invention;
Fig. 4 shows the profile of a preferred embodiment of the panel according to the invention;
Fig. 5 schematically illustrates the assembling of a few panels having the edge profile illustrated in Fig. 4.

Throughout all the Figures the same numeral references have been used for indicating the same components or components that are substantially equivalent.

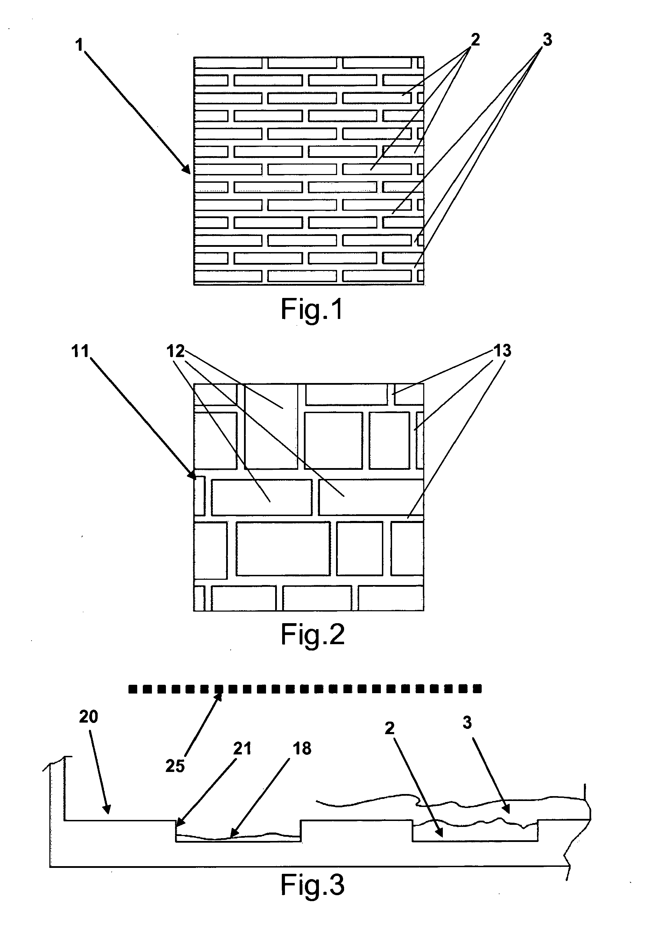

Fig. 1 schematically illustrates a facing panel 1 made through the process according to the invention and reproducing the surface of a bricks wall. The panel generally includes rectangular portions 2, slightly in relief and of reddish colour, simulating the bricks, separated by stripes 3 of a clearer material simulating the mortar.

With reference to Fig. 3, that schematically illustrates a process according to the invention, panel 1 is manufactured by pouring a first mixture 2 into the hollow portions or recesses 21 of a flat or plane mould 20 of silicon rubber, and by subsequently pouring a second mixture 3 that fills the mould and covers the previously poured material. The first mixture comprises a resin, a mineral granulate adapted to mimic the surface of a brick and a catalyst or curing agent, while the second mixture comprises a resin, a second granulate adapted to mimic the interconnecting mortar and a catalyst. The resin of both mixtures is preferably a polyester resin, particularly an ortoftalic polyester resin, although different resins such as vinyl or epoxy resins can be used.

The first mixture can additionally include a colouring agent or a dye e.g. based on iron oxides, capable to impart to the mixture the reddish colour of a brick. As an alternative, before pouring the first resin mixture a layer 18 of a colouring agent or dye can be applied to the bottom of the hollow portions 21. Preferably the second mixture contains a white or a light colour dye.

If necessary or desired for imparting a greater stiffness to the panel, a net-like structure 25 made of thin wires is laid over the surface of the second poured mixture and partially embedded into it. A net of stainless (inox) steel wires was found to be particularly suitable for panels to be applied to damp walls in which the conventional materials are subject to moisture attack.

If necessary or desired, a retarding additive or in case an accelerating additive can be added to at least one of said mixtures.

The mould containing the poured mixture/s is then submitted to a heating step, preferably through one (or in case two or more) radiant lamp(s) for a time from 4 to 7 minutes, preferably for about 5 minutes, so as to bring and maintain the panel material within a temperature range between 25 and 40°C. This way a set panel is obtained that although not completely cured can nevertheless be drawn out from the mould and handled.

Advantageously, when using a polyester resin in the mixture(s) the optimum temperature has been found to be between 30 and 35°C.

After the extraction from the mould the panel can be submitted to a second heating step, at a temperature comprised between 75 and 85°C (preferably between 70 and 80°C) for a time in the order of 10 minutes. Also for this heating it is preferable to employ radiant lamps, although is possible to use different heat sources for carrying out both heating steps, for example electric resistances, flows of warm/hot air, etc.

The heating accelerates the polymerisation (curing) of the resin induced by the catalyst and allows to considerably reduce the time for manufacturing a panel. As an indication, a panel with standard dimensions of cm. 80 x 120 (so-called Europallet size), needs a curing time in the order of 15 minutes to be compared with times of 45-60 minutes of the conventional panels.

In case the panel has to be shaped or to receive a configuration that does not lay in a plane, before completing the curing the silicon rubber mould 20 is properly deformed so that the cured panel will assume and maintain the desired configuration, for example an arched shape for covering columns or arcs. Of course the amount of the deformation is chosen to prevent displacements the poured masses or crackings. As stated before, the panel deformation can occur after a preliminary irradiation with lamps or other heating sources that will increases the consistency of the poured materials.

After reaching the desired consistency, the panels are extracted from the moulds and stored, and under such condition they undergo a final curing that does not require the use of the mould.

The panel embodiment shown in Fig. 2 mimics that of a wall surface with square stones or tiles slightly protruding from a surface 13 of cement 12 or the like, arranged in a regular pattern (or in case according to a random pattern in other embodiments of the panel). Even in this embodiment, in a mould (not shown) provided with shallow recesses, either regularly or randomly arranged in accordance with the surface to be reproduced, a first mixture is poured that comprises marble or stone granules and a resin (e.g. an epoxy resin) with a catalyst, to fill the recesses and form the protruding portion of the panel. Then a second mixture is poured into the mould to cover the former and that fills the spaces between the recesses to mimic the cement or other material in which the stones would be embedded in a wall made with real stones.

The remaining steps of the process are similar to those already described for the construction of the panel shown in Fig. 1.

Obviously several different configurations of the panels are possible, for instance with elements that reproduce wood fillets, in this case without using a second mixture since the fillets would be adjacent to one another, that reproduce random arrangement of stones, etc.

As for what concerns their sizes, the panels of the invention are preferably made as (generally) rectangular panels of 80 x 120 cm. (or in submultiples thereof, such as 40 x 60 cm.) since this dimensional ratio allows to create a so-called 2x3 mosaic with 3 horizontally arranged elements and 2 vertically arranged elements (3x80 = 240 = 2x 120) which is particularly advantageous in view of the many embodiments and possible uses. These dimensions are compatible with the Europallet format and leads to a more realistic appearance of the covering as will be illustrated later.

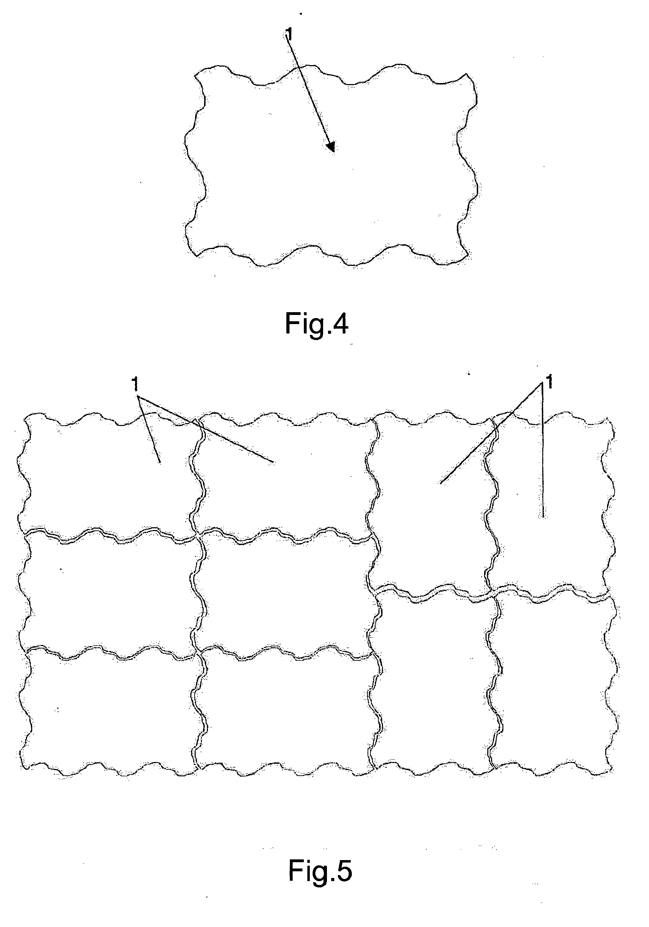

According to a preferred embodiment of the invention, illustrated in Fig. 4, the panel 1 has a generally rectangular shape, but with the edges of all the sides formed with curvilinear complementary profiles, i.e. the edges of the panel have the same profile or curve but, considering two opposite sides, the solid and empty parts are switched to one another.

Preferably such curvilinear profiles are irregular or random. More precisely the profiles of the four sides of the panel 1 are complementary whereby, by placing side by side two panels, either along a horizontal or a vertical direction, their edges interpenetrate, that is the projecting portions (with respect to a rectangular shape) on one edge of a panel, fit into recessed portions in the side of the adjacent panel. This arrangement holds for both vertical and horizontal side positioning of the panels, as well as for a mixed positioning, and particularly in combining together 3 horizontal panels and 2 vertical panels as shown in Fig. 5 to obtain the so-called 2x3 mosaic. Figure 5 clearly shows how both horizontal and vertical panels can be placed side by side. This way the user achieves several possibility of combinations that break the repetitiveness of the panel patterns, conferring a very "natural" appearance to the covering. Of course it is possible to use different curves from those illustrated for the panel edges, for instance as a function of the panel type or size, of the dimensions of the represented elements (bricks, fillets, etc.) as it will result evident to the skilled of the art.

The complementary profiles can be formed either when making the panel, e.g. by using suitably shaped moulds, or by cutting the panel edges at a later stage. The cutting can also be accomplished by the final user through suitably shaped templates and conventional tools.

When applying the panels the interstitial strips between the panels are advantageously made by a silicone filler that compensate the material shrinkage without cracking as it is often the case with rigid plasters. Advantageously to the silicone there can be added powders of inert materials of the same colour of the panel to be joined alongside.

The process of the invention allows to obtain panels of smaller thickness and in shorter times, and with a greater control of their consistency when compared to the panels of the prior art.

The panels can be easily handled by the user and applied with simple fixing means such as screw anchors. Their strong construction allows the user to cut them so as to form panel members having the desired size and interconnecting shape to reduce the waste of material.

Although the invention has been illustrated with reference to preferred embodiments thereof, it is not limited to these embodiments, but it extends to include all the modifications and the changes that will be evident to the skilled of the art, all included within the scope defined by the appended claims.

## Claims

1. A process for manufacturing a facing panel (1, 11) comprising a plurality of generally rectangular portions (2), slightly in relief, mimicking elements such as stones (12) and bricks (2) separated by stripes (3) of a different material simulating mortar, said process comprising the steps of:
- providing an open flat mould (20) of silicone rubber the bottom of which comprises hollow portions or recesses (21) corresponding to said portions in relief;
- pouring into said mould a first mixture (2, 12) comprising a resin, a mineral granulate adapted to mimic the surface of said element (12, 2) and a catalyst or curing agent;
- pouring a second mixture (3, 13) comprising a resin, a second granulate adapted to mimic the interconnecting mortar and a catalyst, with said second mixture filling the mould and covering said first poured mixture;
- subjecting said resin mixtures to a heating step to accelerate its curing;
- extracting the panel from the mould.

2. A process as claimed in claim 1, **characterized by** providing the further step of deforming the mould before the complete hardening of the poured mixtures.

3. A process as claimed in claims 1 or 2, **characterized by** providing the further step of applying a net-like member over the poured mixtures that is partially embedded in the hardened panel.

4. A process as claimed in claims 1 to 3, **characterized in that** said resin is selected from the group comprising polyester resin, vinyl resin, epoxy resin.

5. A process as claimed in claim 4, **characterized in that** said heating step provides for the exposure of the poured mixture(s) to a source of heat comprising at least a lamp.

6. A process as claimed in claim 5, **characterized in that** said heating step includes a heating to a temperature between 25 and 40°C for a time comprised between 4 and 7 minutes.

7. A process as claimed in the preceding claims, **characterized in that** after the extraction from the mould, the panel is submitted to an additional heating at a temperature between 75 and 85°C.

8. A process as claimed in the preceding claims, **characterized in that** at least one of said mixtures comprises a colouring solution.

9. A process as claimed in the preceding claims, **characterized by** providing the further step to apply a colouring solution to at least a portion of the bottom of the mould (20).

10. A process as claimed in the preceding claims, **characterized by** providing the further step of adding a retarding additive to at least one of said mixtures.

11. A process as claimed in the preceding claims, **characterized by** the further step of adding an accelerating additive to at least one of said mixtures.

12. A facing panel (1; 11) comprising a plurality of generally rectangular portions (2), slightly in relief, mimicking stone (12) or bricks (2) said portions comprising at least a hardened resin embedding granules of a first mineral substance, separated by stripes (3) of a different material simulating mortar said stripes comprising at least a hardened resin embedding granules of a second mineral substance, a layer of said different material covering said rectangular portions at the back thereof, wherein the panel (1; 11) has a generally rectangular shape with the edges of all the panel sides formed with complementary profiles, both along the horizontal and the vertical direction, and wherein said edges have irregular curvilinear profiles.

13. A panel as claimed in claim 12, **characterized by** comprising a net-like structure (25) of stainless steel wires embedded into said panel.

14. A panel as claimed in claim 12 or 13, **characterized by** having of generally rectangular shape of 80 x 120 cm, or submultiples thereof.

## Patentansprüche

1. Ein Verfahren zur Herstellung eines Verkleidungspaneels (1, 11) mit einer Mehrzahl von im Allgemeinen rechtwinkligen Bereichen (2) in einem leichten Relief, welche Elemente wie Steine (12) und Ziegel (2) nachahmen und durch Streifen (3) eines anderen, Mörtel simulierenden Materials voneinander getrennt sind, wobei der besagte Prozess die folgenden Schritte aufweist:
- Vorsehen einer offenen, flachen Form (20) aus Silikongummi, deren Boden hohle Bereiche oder Vertiefungen (21) aufweist entsprechend den besagten Bereichen im Relief;
- Eingießen einer ersten Mischung (2, 12) aus einem Harz, einem zum Nachahmen der Oberfläche des besagten Elements (12, 2) geeigneten Mineralgranulats und einem Katalysator oder einem Härter in die besagte Form;
- Eingießen einer zweiten Mischung (3, 13) aus einem Harz, einem zweiten Granulat zum Nachahmen des verbindenden Mörtels und einem Katalysator, wobei die zweite Mischung die Form füllt und die zuerst eingegossene Mischung bedeckt;
- Unterziehen der besagten Harzmischungen einem Heizschritt, um deren Härten zu beschleunigen;
- Entnehmen des Paneels aus der Form.

2. Ein Verfahren nach Anspruch 1, **gekennzeichnet durch** den weiteren Schritt des Deformierens der Form vor dem vollständigen Härten der eingegossenen Mischungen.

3. Ein Verfahren nach Anspruch 1 oder 2, **gekennzeichnet durch** den weiteren Schritt des Applizierens eines netzartigen Bauteils über die eingegossenen Mischungen, welches teilweise in das gehärtete Paneel eingebettet wird.

4. Ein Verfahren nach einem der Ansprüche 1 bis 3, **dadurch gekennzeichnet, dass** das besagte Harz ausgewählt ist aus der Gruppe umfassend Polyesterharz, Vinylharz, Epoxidharz.

5. Ein Verfahren nach Anspruch 4, **dadurch gekennzeichnet, dass** der besagte Heizschritt das Einwirken einer Heizquelle, die wenigstens eine Lampe umfasst, auf die eingegossene(n) Mischung(en) vorsieht.

6. Ein Verfahren nach Anspruch 5, **dadurch gekennzeichnet, dass** der besagte Heizschritt ein Aufheizen auf eine Temperatur zwischen 25 und 40 °C für eine Zeit zwischen 4 und 7 Minuten einschließt.

7. Ein Verfahren nach einem der vorhergehenden Ansprüche, **dadurch gekennzeichnet, dass** das Paneel nach dem Entnehmen aus der Form einem zusätzlichen Heizschritt ausgesetzt wird bei einer Temperatur zwischen 75 und 85 °C.

8. Ein Verfahren nach einem der vorhergehenden Ansprüche, **dadurch gekennzeichnet, dass** wenigstens eine der besagten Mischungen eine Farblösung aufweist.

9. Ein Verfahren nach einem der vorhergehenden Ansprüche, **gekennzeichnet durch** den weiteren Schritt des Applizierens einer Farblösung auf wenigstens einen Bereich des Bodens der Form (20).

10. Ein Verfahren nach einem der vorhergehenden Ansprüche, **gekennzeichnet durch** den weiteren Schritt des Hinzufügens eines Verzögerungsadditivs zu wenigstens einer der besagten Mischungen.

11. Ein Verfahren nach einem der vorhergehenden Ansprüche, **gekennzeichnet durch** den weiteren Schritt des Hinzufügens eines Beschleunigungsadditivs zu wenigstens einer der besagten Mischungen.

12. Ein Verkleidungspaneel (1; 11) mit einer Mehrzahl von im Allgemeinen rechtwinkligen Bereichen (2) in einem leichten Relief, welche Elemente wie Steine (12) und Ziegel (2) nachahmen, wenigstens ein gehärtetes Harz mit eingebetteten Granulen einer ersten mineralischen Substanz aufweisen und durch Streifen (3) eines anderen, Mörtel simulierenden Materials voneinander getrennt sind, wobei die besagten Streifen wenigstens ein gehärtetes Harz mit eingebetteten Granulen einer ersten mineralischen Substanz aufweisen, wobei eine Schicht des besagten, unterschiedlichen Materials die rechtwinkligen Bereiche an ihrer Rückseite bedeckt, und wobei das Paneel (1; 11) eine im Allgemeinen rechtwinklige Gestalt hat mit Kanten an allen Seiten des Paneels, deren Profile zueinander komplementär sind, sowohl entlang der horizontalen als auch entlang der vertikalen Richtung, und wobei die besagten Kanten irreguläre, krummlinige Profile haben.

13. Ein Paneel (1; 11) nach Anspruch 12, **gekennzeichnet durch** eine netzartige Struktur (25) aus in das besagte Paneel eingebetteten, rostfreien Stahldrähten.

14. Ein Paneel (1; 11) nach Anspruch 12 oder 13, **gekennzeichnet durch** eine im Allgemeinen rechteckige Gestalt von 80 x 120 cm, oder Bruchteilen davon.

## Revendications

1. Procédé pour fabriquer un panneau de parement (1, 11) comprenant une pluralité de parties généralement rectangulaires (2), légèrement en relief, imitant des éléments tels que des pierres (12) et des briques (2), séparées par des bandes (3) d'un matériau différent imitant le mortier, ledit procédé comprenant les étapes consistant à :
prévoir un moule plat ouvert (20) en caoutchouc de silicone, dont le fond comprend des parties creuses ou des évidements (21) correspondant auxdites parties en relief ;
déverser dans ledit moule, un premier mélange (2, 12) comprenant une résine, un granulé minéral adapté pour imiter la surface dudit élément (12, 2) et un agent catalyseur ou de durcissement ;
déverser un second mélange (3, 13) comprenant une résine, un second granulé adapté pour imiter le mortier d'interconnexion et un catalyseur, avec ledit second mélange qui remplit le moule et qui recouvre ledit premier mélange déversé ;
soumettre lesdits mélanges de résine à une étape de chauffage pour accélérer son durcissement ;
extraire le panneau du moule.

2. Procédé selon la revendication 1, caractérisé en prévoyant l'étape supplémentaire consistant à déformer le moule avant le durcissement complet des mélanges déversés.

3. Procédé selon la revendication 1 ou 2, caractérisé en prévoyant l'étape supplémentaire consistant à appliquer un élément en forme de filet sur les mélanges déversés qui est partiellement enfoncé dans le panneau durci.

4. Procédé selon les revendications 1 à 3, **caractérisé en ce que** ladite résine est choisie dans le groupe comprenant la résine de polyester, la résine de vinyle, la résine époxy.

5. Procédé selon la revendication 4, **caractérisé en ce que** ladite étape de chauffage fournit l'exposition du (des) mélange(s) déversé(s) à une source de chaleur comprenant au moins une lampe.

6. Procédé selon la revendication 5, **caractérisé en ce que** ladite étape de chauffage comprend un chauffage jusqu'à une température comprise entre 25 et 40 °C pendant un moment compris entre 4 et 7 minutes.

7. Procédé selon les revendications précédentes, **caractérisé en ce que**, après l'extraction du moule, le panneau est soumis à un chauffage supplémentaire à une température comprise entre 75 et 85 °C.

8. Procédé selon les revendications précédentes, **caractérisé en ce qu'**au moins l'un desdits mélanges comprend une solution colorante.

9. Procédé selon les revendications précédentes, caractérisé en prévoyant l'étape supplémentaire d'appliquer une solution colorante sur au moins une partie du fond du moule (20).

10. Procédé selon les revendications précédentes, caractérisé en prévoyant l'étape supplémentaire consistant à ajouter un additif retardateur à au moins l'un desdits mélanges.

11. Procédé selon les revendications précédentes, **caractérisé par** l'étape supplémentaire consistant à ajouter un additif d'accélération à au moins l'un desdits mélanges.

12. Panneau de parement (1 ; 11) comprenant une pluralité de parties généralement rectangulaires (2), légèrement en relief, imitant la pierre (12) ou les briques (2), lesdites parties comprenant au moins une résine durcie enfermant des granulés d'une première substance minérale, séparées par des bandes (3) d'un matériau différent imitant le mortier, lesdites bandes comprenant au moins une résine durcie comprenant des granulés d'une seconde substance minérale, une couche dudit matériau différent recouvrant lesdites parties rectangulaires au niveau de sa partie arrière, dans lequel le panneau (1 ; 11) a une forme généralement rectangulaire avec les bords de tous les côtés de panneau formés avec des profils complémentaires, à la fois le long de la direction horizontale et verticale, dans lequel lesdits bords ont des profils curvilignes irréguliers.

13. Panneau selon la revendication 12, **caractérisé en ce qu'**il comprend une structure en forme de filet (25) réalisée avec des fils en acier inoxydable noyés dans ledit panneau.

14. Panneau selon la revendication 12 ou 13, caractérisé en ayant une forme généralement rectangulaire de 80 × 120 cm ou ses sous-multiples.
